# EUROPEAN PATENT SPECIFICATION

(11) **EP 2 868 937 B1**
(45) Date of publication and mention of the grant of the patent: **04.03.2020**
(21) Application number: 13191440.0
(22) Date of filing: 04.11.2013
(51) Int. Cl.: F16C 19/50, F16C 19/54, F16C 43/04, F16C 25/08

(54) **Bearing arrangement for a wind turbine generator**
Lageranordnung für einen Windturbinengenerator
Ensemble palier pour un générateur de turbine éolienne

(43) Date of publication of application: 06.05.2015
(73) Proprietor: youWINenergy GmbH, 27568 Bremerhaven (DE)
(72) Inventor: Rohden, Rolf, 26607 Aurich (DE)
(74) Representative: Alt, Michael

(56) References cited:
- WO-A1-2013/055291
- DE-A1-102010 008 197
- DE-A1-102010 014 771
- US-A1- 2012 148 013

## Description

### BACKGROUND

The present invention relates generally to a bearing arrangement for a wind turbine generator as well as to a wind turbine generator comprising such a bearing arrangement.

Wind turbines typically include an electric generator for producing electricity. The electric generator comprises a rotating part, also referred to as a rotor, and a stationary part, also referred to as a stator. Furthermore, the rotor includes magnets, either permanent or excited, and the stator includes electrical windings or coils. As a result of a relative movement between the rotor and the stator, an electric current is generated. Generally, the rotor is placed in a concentric arrangement with the stator. The rotor may be provided inside or outside the stator. Furthermore, the rotor may be directly connected to a rotor hub of the wind turbine. The rotor hub may in turn be coupled with a plurality of blades. The rotation of the rotor hub is transmitted to the rotor of the generator. As a result, the generator rotor moves relative to the generator stator resulting in the generation of electrical energy.

DE 10 2010 008 197 A1 describes a bearing arrangement for mounting a rotor of a wind power plant, having a rotor section, which is connected and/or is connectable to the rotor, as a first bearing partner, having a support section, which is connected and/or connectable to an adjacent construction, as a second bearing partner, and having a plurality of track rollers, via which the rotor section and the support section are mounted rotatably relative to one another about an axis of rotation.

### SUMMARY

According to a basic concept of the present subject matter, a bearing arrangement for a wind turbine generator having a stator and a rotor is provided, said bearing arrangement comprising multiple roller units for rotatably supporting said rotor with respect to said stator, wherein each roller unit comprises a bearing mount fixedly mountable with respect to said stator or said rotor, and a roller, wherein each roller unit comprises a single roller and is individually replaceable.

By using multiple roller units for rotatably supporting the rotor with respect to the stator, the rotor is uniformly supported. Furthermore, by using multiple roller units, the force acting on each single roller unit is reduced. Accordingly, the individual roller units can have smaller dimensions because each individual roller unit has to bear a smaller load.

Each roller unit comprises a bearing mount which can be fixedly mounted with respect to the stator or on said rotor. Furthermore, each roller unit comprises a roller. Accordingly, an assembly is provided comprising a bearing mount and a roller. The bearing mount is fixedly mountable with respect to said stator or on said rotor. That is, the bearing mount is mountable on the stator, for instance. It is, also possible to mount the bearing mount on a part which is fixedly and non-rotatably connected to the stator, i.e. the bearing mount is either directly or indirectly mountable on the stator. Also, it is possible to mount the bearing mount on the rotor so that the bearing mount jointly rotates with said rotor.

Furthermore, providing roller units being individually replaceable has the advantage that the roller units can be replaced as needed. In other words, the roller units can be individually replaced depending on their condition. In particular, it is not required to replace the whole bearing arrangement so that a cost-efficient operation of the bearing arrangement is possible. Preferably, the supporting function of the bearing arrangement is maintained when the roller units are individually replaced. Accordingly, it is not necessary to demount the rotor hub or other parts of the wind turbine in order to replace the individual roller units. Consequently, the replacement process is much faster compared to a replacement process in which the rotor hub or other parts of the wind turbine have first to be demounted prior to the replacement of the roller unit and has to be remounted after the roller unit has been replaced. Furthermore, the individual roller units are relatively small so that the handling of the same is easy.

According to another embodiment of the present subject matter, the bearing arrangement further comprises a bearing element, preferably a rotor ring, wherein the roller units are arranged in rolling contact with said bearing element. The bearing element can be operatively connected with the rotor and is preferably able to cooperate with the rollers of the roller units. Thus, a bearing arrangement which can be easily connected to the rotor is achieved resulting in an enhanced mountability of the bearing arrangement in a wind turbine generator.

According to yet another embodiment of the present subject matter, each roller unit comprises a single roller. Accordingly, the dimensions of each roller unit are further reduced resulting in a roller unit which can be handled easier. Therefore, the replacement process of the roller unit is facilitated.

According to yet another embodiment of the present subject matter, the bearing arrangement further comprises a first, a second and a third roller unit group each comprising multiple roller units for rotatably supporting said rotor with respect to the stator and circularly arranged around a bearing arrangement axis, wherein the roller units of the first and second roller unit group are arranged with their longitudinal axes extending substantially perpendicular with respect to the bearing arrangement axis, and the roller units of the third roller unit group are arranged with their longitudinal axes extending substantially parallel with the bearing arrangement axis.

The roller units of the first and second roller unit group are preferably arranged with their longitudinal axes extending substantially perpendicular with respect to the bearing arrangement axis. The bearing arrangement axis preferably coincides with the longitudinal axis of the stator. Accordingly, the roller units of the first and second roller unit groups are arranged so that the axes of the rollers provided in the roller units are arranged perpendicular to the bearing arrangement axis and the longitudinal axis of the stator. Consequently, the roller units of the first and second roller unit group are arranged to receive axial loads. Different configurations are possible. For instance, the first and second roller unit group can be arranged concentrically and can be oriented so that the rollers are directed in the same direction in order to receive axial loads. With this configuration, it is possible to provide a bearing which can receive high loads in one direction. Preferably, the first and the second roller unit group are arranged so that their rollers are directed towards each other. Thus, axial loads in both axial directions can be received by such a combination of roller unit groups. In this case, a bearing arrangement is provided which can restrict the axial movement of the rotating part relative to the stationary part because each bearing can restrict the axial movement of the rotating part in one direction. Accordingly, using a second roller unit group can either be used in order to support the function of the first roller unit group or in such a way, that the second roller unit group is arranged so as to receive axial loads being opposite to the axial loads received by the first roller unit group. Accordingly, by using the first roller unit group and the second roller unit group in combination, it is possible to restrict the axial movement of a rotating element, the rotor for instance.

The roller units of the third roller unit group are preferably arranged with their longitudinal axes extending substantially parallel with the bearing arrangement axis. That is, the roller units of the third roller unit group are adapted to receive radial loads. In combination with the first and the second roller unit group, a bearing arrangement is achieved which can restrict both radial and axial movements of the rotating part, the rotor for instance, and the stationary part, the stator for instance.

According to yet another embodiment of the present subject matter, the first roller unit group and the second roller unit group are axially spaced from each other. Accordingly, a space is provided between the first roller unit group and the second roller unit group. For example, it is possible to provide the bearing element between the first roller unit group and the second roller unit group. This results in a configuration in which the rollers of the first and the second roller unit group are arranged to get in rolling contact with the bearing element on opposite sides of the same. Accordingly, a bearing is provided which is able to restrict an axial movement of the bearing element and of the rotor when operatively connected with the bearing element.

According to a further embodiment of the present subject matter, the third roller unit group is axially arranged between the first roller unit group and the second roller unit group. Accordingly, a space is provided which is limited by the rollers of the first roller unit group, the second roller unit group and the third roller unit group. Preferably, the bearing element is placed in this space. Hence, a bearing is provided which combines the function of an axial bearing and a radial bearing.

According to another embodiment of the present subject matter, each of the roller units further comprises a bearing mount supporting the roller in a freely rotatable manner. In other words, the rotation of the roller is not restricted when the roller is mounted in the bearing mount. Such a configuration reduces the wear of each individual roller. More precisely, the rollers of the roller units are in rolling contact in only one area of their respective outer peripheral surface. Contrary to bearing arrangements comprising usual rolling-element bearings in which the rollers are in contact with two bearing rings on their opposite sides, the rollers which are mounted in the above bearing mounts are only in contact with one part so that the wear and tear of the rollers is reduced and the durability of the roller unit is enhanced. Furthermore, the friction in the bearing arrangement is reduced so that the friction loss in the bearing is reduced. Consequently, the efficiency of the wind turbine generator is raised.

In order to arrange the roller in a freely rotatable manner, according to yet another embodiment of the present subject matter, each of said roller units further comprises a bearing axle, wherein said roller is rotatably supported on said bearing axle mounted on said bearing mount. Different configurations are possible here. For example, according to one configuration, the bearing axle is fixedly and non-rotatably mounted on the bearing mount and the roller is rotatably mounted on the bearing axle, e.g. by means of a suitable bearing, a rolling-element bearing for instance. On the other hand, it is also possible to rotatably support the bearing axle on the bearing mount and to fixedly and non-rotatably mount the roller on the bearing axle. Accordingly, a simple construction is achieved in which the roller is freely rotatable.

According to another embodiment of the present subject matter, the roller unit further comprises an urging means for urging said roller in a predetermined direction. Preferably, the urging means is provided in such a manner that the urging means urges the roller units or the rollers towards the bearing element in order to keep the rollers in contact with the bearing element at all times. Such an urging means can be a single element, e.g. a spring, provided on one side of the roller unit. In this case, such a single urging element is able to apply a pushing force on the roller unit in a direction that said roller unit is urged towards the bearing element, and can be pretensioned. According to another preferable arrangement, two urging means, e.g. two springs, are provided on both axial sides of the roller in order to support the roller against the bearing mount. In this case, the urging means are adapted to apply a pushing force on the bearing axle of the roller so as to apply a pushing force on the bearing axle of the roller on both sides in the radial direction of the roller. Accordingly, small movements of the bearing element are possible but the rollers are kept in contact with the bearing element at all times.

According to a further embodiment of the present subject matter, a wind turbine generator is provided comprising a stator, a rotor and a bearing arrangement as described above. In this wind turbine generator, the bearing arrangement is supported on one of the stator and the rotor. Accordingly, wind turbine generator having the above-described enhanced bearing arrangement is provided.

According to still another embodiment of the present subject matter, the wind turbine generator further comprises a bearing element which is rotatable with the rotor or provided stationary on the stator and which is in contact with the rollers. Hence, the rotor is rotatably supported with respect to the stator by the cooperation of the bearing element and the rollers. This is beneficial from the viewpoint that the material of the bearing element can be suitably chosen regarding the durability and fail safe running functions. Since only the material of the bearing element has to be chosen properly to ensure an optimum cooperation with the rollers, the remaining material of the rotor can be chosen without considering the bearing properties. Accordingly, a cost-efficient construction can be realized.

According to yet another embodiment of the present subject matter, the bearing element is mountable on the rotor or on the stator. For that purpose, the bearing element can comprise a flange or any other suitable means which enables the bearing element to be connected to the rotor or the stator. Accordingly, the bearing arrangement can be easily connected to the rotor or the stator.

Preferably, according to yet another embodiment of the present subject matter, the bearing element is integrally formed with said rotor or with said stator. Such a construction has the advantage that the number of parts is reduced.

According to a further embodiment of the present subject matter, the roller unit groups are arranged stationary with respect to the stator. For instance, the roller unit groups maybe mounted on the stator. Accordingly, upon rotation of the rotor, the roller unit groups remain stationary. It is, however also possible to arrange the roller unit groups stationary with respect to the rotor. In other words, the roller units can be mounted on the rotor and perform a rotating motion together with the rotor.

According to yet another embodiment of the present subject matter, the bearing element further comprises a lining element being in contact with said roller units. The lining element can be positioned in such a manner that throughout the rotary motion between the stator and the rotor, the lining element maintains in contact with the plurality of roller units of the three roller unit groups. Such a lining element can perform different functions. For example, the lining element can be of a specific material enhancing the rolling contact between the rollers and the same. Furthermore, the lining element can be replaceably mounted on the bearing element and form the contact surface with which the rollers are in contact. Thus, the lining element can be replaced in case the contact surface with which the rollers are in contact is worn out.

According to yet another embodiment of the present subject matter, at least the lining element comprises a material having a high thermal conductivity. Consequently, the lining element can promote the heat dissipation from the bearing. Thus, the durability of the bearing arrangement is enhanced.

According to a further embodiment of the present subject matter, a bearing arrangement for a wind turbine generator having a stator and a rotor is provided. The bearing arrangement comprises a first, a second and a third roller unit group each comprising multiple roller units for rotatably supporting the rotor with respect to the stator and circularly arranged around a bearing arrangement axis. Each roller unit comprises a single roller and is individually replaceable. The roller units of the first and second roller unit group are arranged with their longitudinal axes extending substantially perpendicular with respect to the bearing arrangement axis. The roller units of the third roller unit group are arranged with their longitudinal axes extending substantially parallel with the bearing arrangement axis. The bearing arrangement further comprises a bearing element, wherein the roller units are arranged in rolling contact with the bearing element. The_roller units of said first roller unit group are detachably mounted on an axial end face of said stator and said roller units of said second and third roller unit groups are mounted on a peripheral surface of said stator. Alternatively, the roller units of the first, second and third roller unit groups are detachably mounted on an inner peripheral surface of the rotor.

According to yet another embodiment of the present subject matter, the roller units of the first roller unit group are detachably mounted on an axial end face of the stator. Thus, the roller units of the first roller unit group are easily accessible so that the bearing has an enhanced maintainability.

Furthermore, according to a further embodiment of the present subject matter, the roller units of the second roller unit group are mounted on a peripheral surface of the stator. Accordingly, the roller units of the second roller unit group can be easily mounted on the stator, e.g. from the inside of the stator and by means of bolts.

According to yet another embodiment of the present subject matter, the roller units of the third roller unit group are mounted on a peripheral surface of the stator. This arrangement also simplifies the mounting or replacement of the roller units of the third roller unit group.

According to a further embodiment of the present subject-matter, the roller units of the first, second and third roller unit groups are detachably mounted on an inner peripheral surface of the rotor.

With the above described constructions, the further advantages are achieved that an air gap between the rotor and the stator is maintained and that a deformation in one of the rollers does not affect the efficiency of the wind turbine installation.

### BRIEF DESCRIPTION OF THE DRAWINGS

- Figure 1: shows a perspective view of a wind turbine generator according to an embodiment of the present subject matter.
- Figure 2: is an enlarged view of a section of the wind turbine generator shown in Fig. 1.
- Figure 3: is a perspective view of a stator of the wind turbine generator shown in Fig. 1.
- Figures 4A to 4C: are perspective views of roller units according to an embodiment of the present subject matter.
- Figures 5A to 5C: show further views of the roller units shown in Fig. 4A to 4C.
- Figure 6: shows a sectional view of the roller unit of Fig. 4A to 4C and 5A to 5C in a longitudinal direction.
- Figures 7A and 7B: show different views of a further roller unit according to the embodiment of the present subject matter.
- Figure 8: shows a sectional view of the bearing arrangement taken in the plane indicated in Fig. 2 and marked with reference sign VIII.

In the following, an embodiment of the present subject matter is explained based on the drawings. Further alternative modifications of the embodiment which are at least in part not illustrated are specified in the following description as well.

### DESCRIPTION OF THE EMBODIMENT

During operation of a wind turbine, static loads, such as the mass of the rotor, as well as dynamic loads resulting from the wind forces acting on the wind turbine, act on the rotor of the wind turbine. Therefore, the rotor of the wind turbine is generally supported by a bearing arrangement adapted to withstand such forces.

The bearing arrangement provides a rotational support between the rotor and the stator and is arranged to provide an air gap between rotor and stator which is essential for producing electrical energy. For an efficient functioning of the wind turbine the bearings should enable high and low speed operations, minimize friction, and efficiently handle the static and the dynamic loads associated with the wind turbine. Appropriate designs for such bearings are essential to ensure that the generator functions economically and efficiently.

For the above bearing arrangement, rolling-element bearings are used. Such rolling-element bearings typically include rollers which are arranged between two bearing rings. In this kind of bearing, a relative motion of the two rings causes the elements to roll with very little rolling resistance and with little sliding or slip. Therefore, such bearings provide good bearing properties but have certain drawbacks.

For example, such rolling-element bearings are subject to wear and tear and under the loads acting on such rolling-element bearings in wind turbine generators, frequent maintenance of the bearings is necessary. The maintenance of such generator bearings, however, involves high costs and a long time in which the wind turbine cannot operate.

To address the above mentioned issues, the bearings can be segmented. In such a case, the plurality of segmented portions can be assembled to form a complete bearing arrangement for the wind turbine. However, assembling such segmented portions may also be a time consuming and cost intensive activity, due to heavy weight and size of each of the segmented sections.

Another conventional technique for addressing the above mentioned issues is to provide bearings having a thicker material. As a result, the bearings are strong and more resistant to deformations and consequently have an enhanced durability. However, due to the thicker material, such bearings are costly and have an increased weight. Furthermore, for large wind turbines the size of the bearings required also has to be large resulting in very heavy and costly bearings and an overall reduction in cost efficiency of the wind turbine.

Still further, conventional bearings also require lubrication to ensure that the movement of the element is as frictionless as possible. Lubrication also ensures that the temperature of the elements in the bearing, due to the friction, is optimal. However, during operation particulate matter generated due to the motion of the element may get suspended in the lubricant. As a result, the lubricant has to be periodically inspected to ensure that the level of suspended particulate matter is not too high. As would be appreciated by a person skilled in the art, a high concentration of such suspended particulate matter will also induce wear and tear of the rolling-elements of the bearings.

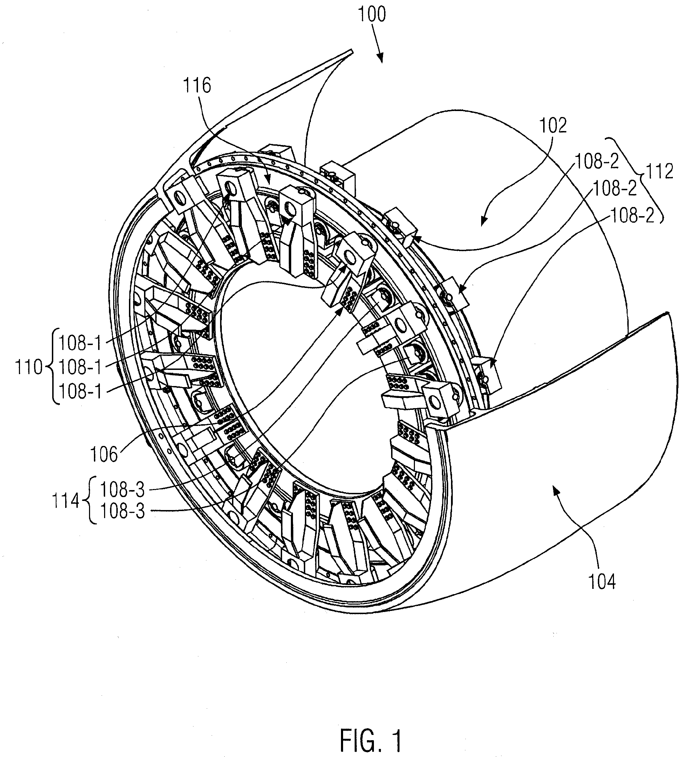

Fig. 1 shows a wind turbine generator 100 according to an embodiment of the present subject matter. In the following, the elements forming the wind turbine generator will be explained first.

The wind turbine generator 100 shown in Fig 1 comprises a stator 102 and a rotor 104. The stator 102 is fixedly connectable to a nacelle of a wind turbine assembly whereas the rotor 104 is fixedly connectable to a rotor hub of the wind turbine. More precisely, according to the embodiment, the rotor hub (not shown) can be connected to the rotor on the left side in Fig. 1. The end of the stator 102 on the left side in Fig. 1 is therefore also referred to as hub-end of the stator. On the other hand, the right side end of the stator in Fig. 1 is also referred to as nacelle-end of the stator 102. The rotor 104 and the stator 102 are concentrically arranged around the same axis so that the rotor 104 is rotatable with respect to the stator 102. According to the embodiment shown in Fig. 1, the rotor 104 is arranged outside of the stator 102 and covers the same. In other words, the stator 102 is arranged inside the rotor 104.

In order to rotatably support the rotor 104 with respect to the stator 102 the wind turbine generator shown in Fig. 1 comprises a bearing arrangement 106. The bearing arrangement 106 comprises multiple roller units 108 for rotatably supporting the rotor 104 with respect to the stator 102. According to the present embodiment shown in Fig. 1, the roller units 108 are mounted on the stator 102.

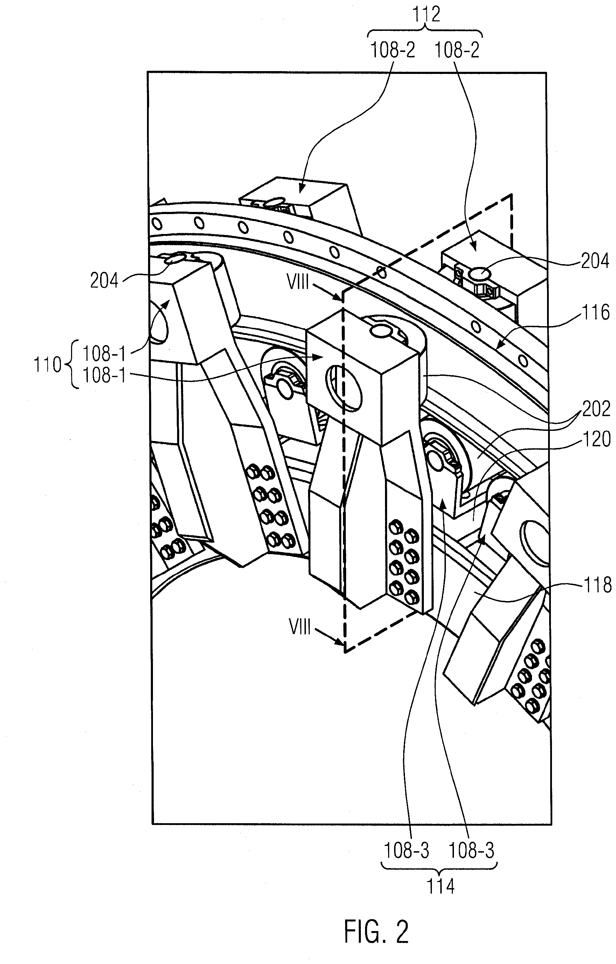

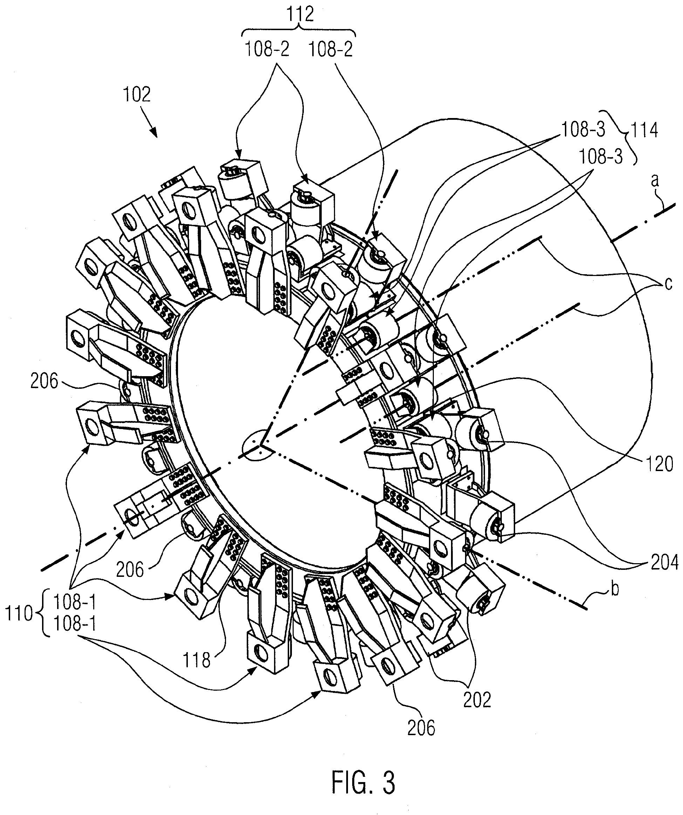

The arrangement of the roller units 108 on the stator 102 is shown in detail in Figs. 2 and 3. Fig. 2 is an enlarged view of a portion of the generator of Fig. 1 and Fig. 3 is a perspective view showing only the stator 102. As is shown in Figs. 2 and 3, the roller units 108 are arranged in three different groups. The arrangements of the roller units 108 in the three different groups have in common that the roller units 108 are arranged around a bearing arrangement axis a which corresponds to the longitudinal axis of the stator 102. Furthermore, the roller units 108 are arranged around the bearing arrangement axis a at equal distance in the circumferential direction in each group.

As can be seen from Fig. 3, a first roller unit group 110 is provided and comprises multiple roller units 108 arranged on an axial end face 118 of the stator 102. The roller units 108 arranged on the axial end face 118 of the stator 102 are also referred to as first roller units 108-1 in the following. Furthermore, a second roller unit group 112 comprising multiple roller units 108 is also arranged on the stator 102. The roller units 108 of the second roller unit group 112 will be referred to as second roller units 108-2 in the following. As is shown in Fig. 3, the second roller units 108-2 are arranged on an outer peripheral surface 120 of the stator 102.

As is the case with the first roller units 108-1 in the first roller unit group 110, the second roller units 108-2 of the second roller unit group 112 are also arranged at equal distance around the bearing arrangement axis a. As can be seen from Fig. 3, the number of the second roller units 108-2 provided on the outer peripheral surface 120 of the stator 102 is equal to the number of first roller units 108-1 provided on the axial end face 118 of the stator 102. The first roller units 108-1 and the second roller units 108-2 are arranged opposite to each other and without any radial offset. Furthermore, the first roller units 108-1 and the second roller units 108-2 are provided at the same equal distance around the bearing arrangement axis a.

As is shown in Fig. 3, a third roller unit group 114 is provided comprising multiple roller units 108. The roller units 108 of the third roller unit group 114 are also referred to as third roller units 108-3 in the following. As is the case with the second roller unit 108-2, the third roller units 108-3 are provided on the outer peripheral surface 120 of the stator 102 too. Compared to the number of the first roller units 108-1 and the second roller units 108-2, the number of the third roller units 108-3 is twice as high. As is also the case in the first and second roller unit groups 110, 112, the third roller units 108-3 are arranged at equal distance around the bearing arrangement axis a. Furthermore, the third roller unit group 114 is provided between the first roller unit group 110 and the second roller unit group 112. In other words, the first roller unit group 110 and the second roller unit group 112 are axially spaced from each other. The third roller unit group 114 is consequently axially arranged between the first roller unit group 110 and the second roller unit group 112.

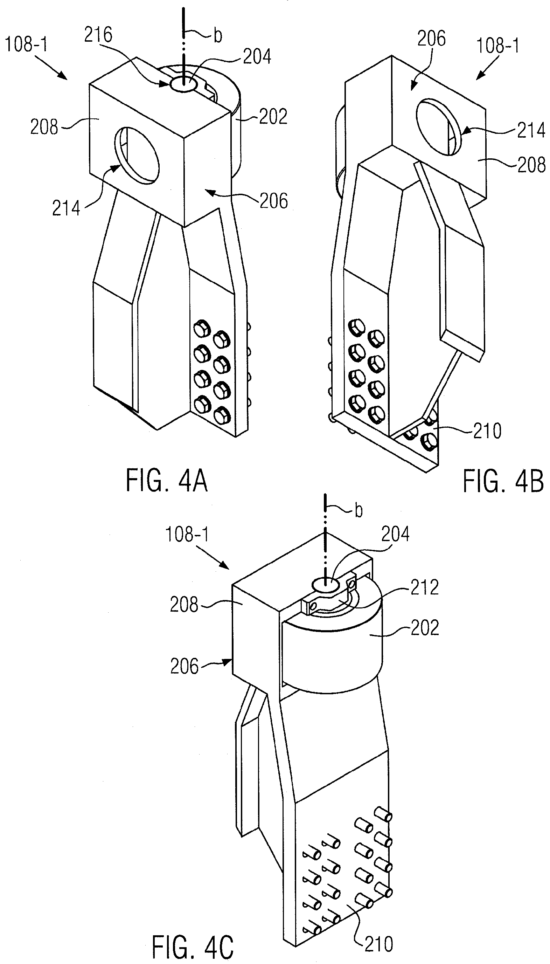

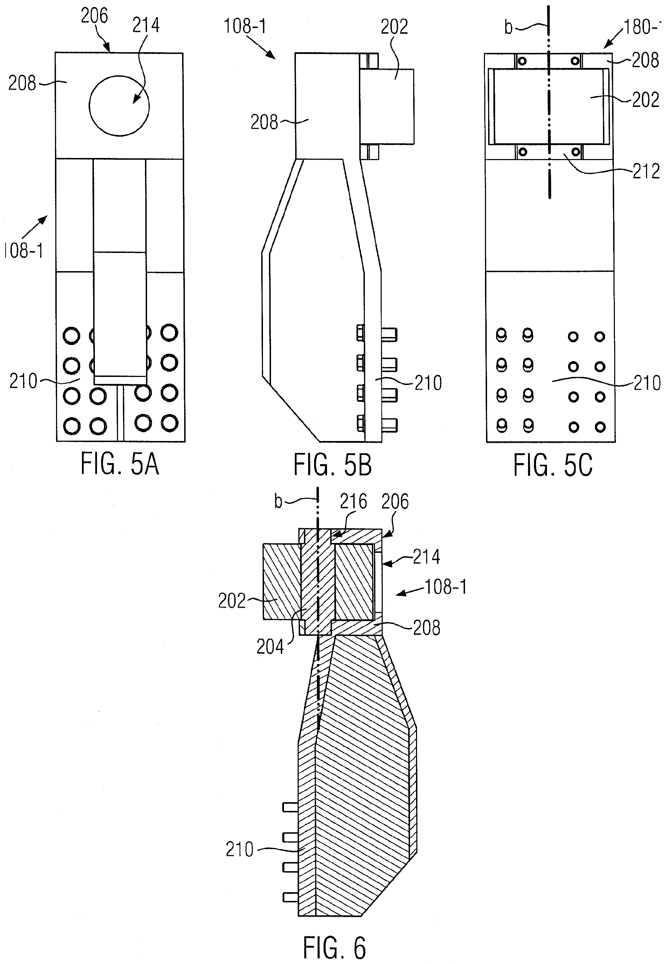

In the following, the construction of the first roller units 108-1 will be described with reference to Fig. 4A-4C, 5A-5C and 6. As is shown in these figures, the first roller unit 108-1 comprises an axial roller 202-1 and a bearing mount 206-1. The bearing mount 206-1 comprises a seat portion 208 and a fastening portion 210. Furthermore, the bearing mount 206 is an elongated member wherein the seat portion 208 and the fastening portion 210 are arranged offset from each other in the longitudinal direction of the bearing mount 206.

The seat portion 208 is box-shaped and is adapted to accommodate and partially surround the axial roller 202. As is shown in Fig. 4A, an opening 214 is arranged in the bottom portion of the seat portion 208. On the opposite side, the seat portion 208 comprises two recesses 216 which are adapted to accommodate a bearing axle 204 on which the axial roller 202 is mounted. Therefore, the recesses 216 have shapes which correspond to the outer contours of the ends of the bearing axle 204.

In order to fix the bearing axle 204 on the seat portion 208, a bracket 212 is used which comprises an arc-shaped portion surrounding at least a part of the bearing axle 204 and two flange portions which are adapted to be fixed to the seat portion 208 by means of bolts. As is shown in Fig. 4C, the bearing axle 204 is fixedly and non-rotatably mounted on the seat portion 208 of the bearing mount 206 by means of the bracket 212. The axial roller 202 is mounted on the bearing axle 204 by means of a rolling-element bearing so that the axial roller 202 is rotatable around the bearing axle 204. Furthermore, the roller 202 is mounted freely rotatable in the seat portion 208.

As is shown in the figures, the fastening portion 210 is a flat portion comprising multiple through holes into which bolts can be inserted. Upon mounting the first roller units 108-1 on the axial end face 118 of the stator 102, the fastening portion 210 is brought into contact with the axial end face 118 of the stator 102 and fixed thereon by means of bolts.

The first roller unit 108-1 comprises a longitudinal axis b which coincides with the axis of the bearing axle 204. In the first roller unit 108-1, the axial roller 202 is mounted on the seat portion 208 in such a manner that the bearing axle 204 is oriented in the longitudinal direction of the bearing mount 206. Furthermore, as is shown in the figures, the through holes provided in the fastening portion 210 extend perpendicular to the longitudinal axis b. Thus, when mounted on the stator 102, in the first roller unit 108-1 the exposed part of the roller 202 is oriented towards the stator 102.

As is already mentioned above, an opening 214 is provided in the bottom portion of the seat portion 208. This opening 214 allows for an air exchange so that the roller 202 can be cooled.

As is further shown in the figures, the seat portion 208 and the fastening portion 210 are further connected by means of a reinforcing rib. This reinforcing rib is provided in order to increase the rigidity of the bearing mount 206. Thus, loads acting on the roller 202 and consequently on the seat portion 208 can be reliably transferred to the fastening portion 210 by means of the reinforcing rib.

As is shown in Fig. 3, the construction of the second roller unit 108-2 is similar to the construction of the first roller unit 108-1. More precisely, the second roller unit 108-2 also comprises a seat portion and a fastening portion. However, contrary to the first roller unit 108-1, the through holes provided in the fastening portion extend in parallel with the longitudinal axis b. This construction is necessary so as to mount the second roller unit 108-2 on the outer peripheral surface of the stator 102. Thus, when mounted on the stator 102, in the second roller unit 108-2 the exposed part of the roller 202 is oriented in the bearing arrangement axis direction.

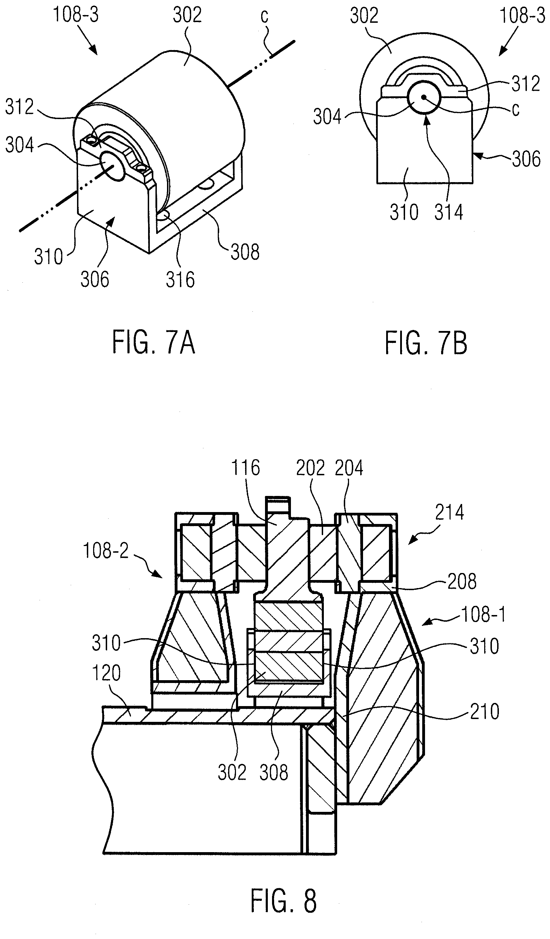

The construction of the third roller unit 108-3 is shown in Fig. 7A and 7B. The third roller unit 108-3 comprises an axial roller 302 and a bearing mount 306. Similar to the first roller unit 108-1, the axial roller 302 is provided on a bearing axle 304 which is supported on the bearing mount 306. The bearing mount 306 comprises a base portion 308 and two leg portions 310 both extending in the same direction from the base portion 308. Accordingly, the bearing mount 306 is U-shaped. On the free ends of the leg portions 310, recesses 314 are provided in order to support the bearing axle 304. Therefore, the recesses 314 are formed in such a manner as to correspond to the outer shape of the bearing axle 304. A bracket 312 is used in order to non-rotatably fix the bearing axle 304 on the leg portions 310 of the bearing mount 306. The axial roller 302 is mounted on the bearing axle 304 by means of a rolling-element bearing (not shown). In the base portion 308 of the bearing mount 306, multiple through holes 316 are provided. According to the embodiment, threads are provided in the through holes 316 so that the base portion 308 can be fixedly mounted to the stator 102 by means of bolts.

Referring back to Figs. 1-3 and with reference to Fig. 8, the arrangement of the roller units 108 is described in greater detail. Figure 8 is a sectional view of the bearing arrangement taken in the plane indicated in Fig. 2 and marked with reference sign VIII.

As is already described above and shown in Fig. 8, the first roller units 108-1 of the first roller unit group 110 are mounted on the axial end face 118 of the stator 102 with the free or exposed portion of the rollers, i.e. the portion protruding beyond the seat portion 208, facing in the direction of the stator 102. Axially spaced from the first roller unit group 110, the second roller units 108-2 of the second roller unit group 112 are provided on the outer peripheral surface 120 of the stator. The exposed portion of the rollers of the second roller unit group 112 is oriented towards the roller units 108 of the first roller unit group 110. The third roller units 108-3 of the third roller unit group 114 are arranged axially between the first roller unit group 110 and the second roller unit group 112.

Between the first and the second roller unit 110, 112 and radially outside the third roller unit group 114, the rotor ring 116, which is an example for a bearing element according to the invention, is provided and the rollers 202, 302 of the first, the second and the third roller unit group are arranged in rolling contact with the rotor ring 116. In other words, the first roller unit group and the second roller unit group 112 restrict an axial movement of the rotor ring 116 whereas the third roller unit group restricts the radial movement of the rotor ring 116. More precisely, the rollers 302 of the third roller units 108-3 of the third roller unit group 114 are in contact with the inner circumferential surface of the rotor ring 116. On the other hand, the rollers 202 of the first roller unit group 110 and the second roller unit group 112 are in contact with axial end faces of the rotor ring 116.

As is shown in Fig. 3, the longitudinal axes c of the third roller units 108-3 are arranged in parallel with the bearing arrangement axis a. Furthermore, the first roller units 108-1 of the first roller unit group 110 and their rollers 202 and the second roller units 108-2 of the second roller unit group 112 and their rollers are arranged in such a manner that their longitudinal axes b extend substantially perpendicular to the bearing arrangement axis a.

Accordingly, the bearing arrangement 106 is constructed to receive axial and radial loads. Consequently, the rotor 104 can be reliably and rotatably mounted on the stator 102.

### MODIFICATIONS

According to the embodiment shown in Fig. 1, the rotor 104 is arranged outside of the stator 102. However, according to a modification an inverted arrangement can be realized. More precisely, it is possible to arrange the rotor inside that stator.

In the embodiment as described above, the roller units 108 are arranged on the stator 102. However, according to a further modification the roller units are mounted on the rotor. In other words, the roller unit groups are not stationary. On the other hand, contrary to the embodiment described above, a stator ring would replace the rotor ring 116.

According to the embodiment, the number of the third roller units 108-3 is twice as high as the number of the first roller units 108-1 and the second roller units 108-2. In practice, the number of the roller units is arbitrary.

In the embodiment, the third roller unit group 114 is provided axially between the first roller unit group 110 and the second roller unit group 112. However, it is possible to arrange the third roller unit group 114 outside of the space between the first roller unit group 110 and the second roller unit group 112.

According to the above embodiment, the three roller unit groups 110, 112 and 114 are arranged on the hub-end of the stator 102. However, the position at which the three roller unit groups are arranged could be elsewhere and is arbitrary. For instance, it is also possible to provide the three roller groups on the nacelle-end of the stator 102.

Furthermore, according to the embodiment, a single roller 202 is provided in each roller unit 108. It is, however, also possible to use roller units comprising two or more rollers. For example, it is possible to use a bearing mount in which multiple rollers are supported freely rotatable on corresponding bearing axles.

Although not shown in the figures, the bearing element may comprise a lining element being in contact with the roller units. The lining element can be positioned in such a manner that throughout the rotary motion between the stator and the rotor, the lining element maintains in contact with the plurality of roller units of the three roller unit groups. This lining element can perform different functions. For example, the lining element can be of a specific material enhancing the rolling contact between the rollers and the same. Furthermore, the lining element can be replaceably mounted on the bearing element and form the contact surface with which the rollers are in contact. Thus, the lining element can be replaced in case the contact surface with which the rollers are in contact is worn out. Furthermore, at least the lining element may comprise a material having a high thermal conductivity. Consequently, the lining element can promote the heat dissipation from the bearing. Additionally, the bearing element can be made of a material having high conductivity as well so that the heat dissipation is further enhanced. Thus, the durability of the bearing arrangement is enhanced.

The above embodiment is described with respect to the first, the second and the third roller unit group. However, the present subject-matter is not limited to three roller unit groups. By contrast, further roller unit groups can be provided as needed.

## Claims

1. Wind turbine generator (100) having a stator (102) and a rotor (104) and a bearing arrangement (106), wherein said bearing arrangement is supported on one of said stator and said rotor, said bearing arrangement (106) comprising
a first, a second and a third roller unit group (110, 112, 114) each comprising multiple roller units (108, 108-1, 108-2, 108-3) for rotatably supporting said rotor (104) with respect to said stator and circularly arranged around a bearing arrangement axis, wherein
said roller units (108) of said first (110) and second roller unit group (112) are arranged with their longitudinal axes extending substantially perpendicular with respect to said bearing arrangement axis, and
said roller units (108-3) of said third roller unit group (114) are arranged with their longitudinal axes extending substantially parallel with said bearing arrangement axis, and wherein
said bearing arrangement further comprises a bearing element (116), wherein said roller units (108) are arranged in rolling contact with said bearing element (116),
wherein said roller units (108-1) of said first roller unit group (110) are detachably mounted on an axial end face (118) of said stator (102) and said roller units (108) of said second and third roller unit groups (110, 112) are mounted on an outer peripheral surface (120) of said stator (102), or
said roller units (108, 108-1, 108-2, 108-3) of said first, second and third roller unit groups (110, 112, 114) are detachably mounted on an inner peripheral surface of said rotor (104),
**characterised in that** each roller unit (108, 108-1, 108-2, 108-3) comprises a single roller (202, 302) and is individually replaceable.

2. Wind turbine generator according to claim 1, wherein said first roller unit group (110) and said second roller unit group (112) are axially spaced from each other.

3. Wind turbine generator according to claim 2, wherein said bearing element (116) is arranged between said first roller unit group (110) and said second roller unit group (112).

4. Wind turbine generator according to one of the preceding claims, each of the roller units (108, 108-1, 108-2, 108-3) comprising a bearing mount (206, 306) supporting the roller (202, 302) in a freely rotatable manner.

5. Wind turbine generator according to one of the preceding claims, wherein said third roller unit group (114) is axially arranged between said first roller unit group (110) and said second roller unit group (112).

6. Wind turbine generator according to claim 5, wherein each of said roller units (108) further comprises a bearing axle (204, 304), wherein said roller (202, 302) is rotatably supported on said bearing axle (204, 304) mounted on said bearing mount (206, 306).

7. Wind turbine generator according to one of the preceding claims, wherein said roller units (108) further comprise an urging means for urging said rollers (202, 302) towards a predetermined position.

8. The wind turbine generator (100) according to one of the preceding claims, wherein said bearing element (116) is rotatable with said rotor (104) or stationary with respect to said stator (102).

9. The wind turbine generator (100) according to claim 8, wherein said bearing element (116) is mounted on said rotor (104) or said stator (102).

10. The wind turbine generator (100) according to claim 8, wherein said bearing element (116) is integrally formed with said rotor (104) or integrally formed with said stator (102).

11. The wind turbine generator (100) according to any of the preceding claims, wherein the bearing element (116) further comprises a lining element being in contact with said roller units (108).

12. The wind turbine generator (100) according to claim 11, wherein said lining element and/or said bearing element comprises a material having a high thermal conductivity.

## Patentansprüche

1. Windturbinengenerator (100), welcher einen Stator (102) und einen Rotor (104) und eine Lageranordnung (106) aufweist, wobei die Lageranordnung an dem Stator oder an dem Rotor gehalten ist, wobei die Lageranordnung (106) aufweist eine erste, zweite und dritte Gruppe (110, 112, 114) von Rolleneinheiten, welche jeweils mehrere Rolleneinheiten (108, 108-1, 108-2, 108-3) zum drehbaren Stützen des Rotors (104) in Bezug auf den Stator aufweisen und kreisförmig um eine Lageranordnungsachse angeordnet sind,
wobei die Rolleneinheiten (108) der ersten (110) und zweiten Gruppe (112) von Rolleneinheiten so angeordnet sind, dass sich ihre longitudinalen Achsen im Wesentlichen senkrecht in Bezug auf die Lageranordnungsachse erstrecken, und
die Rolleneinheiten (108-3) der dritten Gruppe (114) von Rolleneinheiten so angeordnet sind, dass sich ihre longitudinalen Achsen im Wesentlichen parallel zu der Lageranordnungsachse erstrecken, und
wobei die Lageranordnung ferner ein Lagerelement (116) aufweist, wobei die Rolleneinheiten (108) in Rollkontakt mit dem Lagerelement (116) angeordnet sind,
wobei die Rolleneinheiten (108-1) der ersten Gruppe (110) von Rolleneinheiten an einer axialen Stirnfläche (118) des Stators (102) abnehmbar montiert sind und die Rolleneinheiten (108) der zweiten und dritten Gruppe (110, 112) von Rolleneinheiten an einer äußeren Umfangsfläche (120) des Stators (102) montiert sind oder
die Rolleneinheiten (108, 108-1, 108-2, 108-3) der ersten, zweiten und dritten Gruppe (110, 112, 114) von Rolleneinheiten an einer inneren Umfangsfläche des Rotors(104) abnehmbar montiert sind,
**dadurch gekennzeichnet, dass** jede Rolleneinheit (108, 108-1, 108-2, 108-3) eine einzige Rolle (202, 302) aufweist und einzeln austauschbar ist.

2. Windturbinengenerator gemäß Anspruch 1, wobei die erste Gruppe (110) von Rolleneinheiten und die zweite Gruppe (112) von Rolleneinheiten axial voneinander beabstandet sind.

3. Windturbinengenerator gemäß Anspruch 2, wobei das Lagerelement (116) zwischen der ersten Gruppe (110) von Rolleneinheiten und der zweiten Gruppe (112) von Rolleneinheiten angeordnet ist.

4. Windturbinengenerator gemäß einem der vorhergehenden Ansprüche, wobei jede der Rolleneinheiten (108, 108-1, 108-2, 108-3) einen Lagerbock (206, 306) aufweist, welcher die Rolle (202, 302) auf eine frei drehbare Weise stützt.

5. Windturbinengenerator gemäß einem der vorhergehenden Ansprüche, wobei die dritte Gruppe (114) von Rolleneinheiten axial zwischen der ersten Gruppe (110) von Rolleneinheiten und der zweiten Gruppe (112) von Rolleneinheiten angeordnet ist.

6. Windturbinengenerator gemäß Anspruch 5, wobei jede der Rolleneinheiten (108) ferner eine Lagerachse (204, 304) aufweist, wobei die Rolle (202, 302) auf der an dem Lagerbock (206, 306) montierten Lagerachse (204, 304) drehbar gehalten wird.

7. Windturbinengenerator gemäß einem der vorhergehenden Ansprüche, wobei die Rolleneinheiten (108) ferner ein Drängmittel aufweisen, um die Rollen (202, 302) in Richtung auf eine vorbestimmte Position zu drängen.

8. Windturbinengenerator (100) gemäß einem der vorhergehenden Ansprüche, wobei das Lagerelement (116) drehbar mit dem Rotor (104) oder stationär in Bezug auf den Stator (102) ist.

9. Windturbinengenerator (100) gemäß Anspruch 8, wobei das Lagerelement (116) an dem Rotor (104) oder dem Stator (102) montiert ist.

10. Windturbinengenerator (100) gemäß Anspruch 8, wobei das Lagerelement (116) einstückig mit dem Rotor (104) ausgebildet ist oder einstückig mit dem Stator (102) ausgebildet ist.

11. Windturbinengenerator (100) gemäß einem der vorhergehenden Ansprüche, wobei das Lagerelement (116) ferner ein Auskleidungselement aufweist, welches mit den Rolleneinheiten (108) in Kontakt ist.

12. Windturbinengenerator (100) gemäß Anspruch 11, wobei das Auskleidungselement und/oder das Lagerelement ein Material aufweist, welches eine hohe thermische Leitfähigkeit aufweist.

## Revendications

1. Générateur d'éolienne (100) ayant un stator (102) et un rotor (104) et un agencement de palier (106), ledit agencement de palier étant supporté sur ledit stator ou ledit rotor, ledit agencement de palier (106) comprenant
un premier, un deuxième et un troisième groupe d'unités de rouleaux (110, 112, 114) comprenant chacun plusieurs unités de rouleaux (108, 108-1, 108-2, 108-3) pour supporter de manière rotative ledit rotor (104) par rapport audit stator et disposés en cercle autour d'un axe de l'agencement de palier,
dans lequel lesdites unités de rouleaux (108) desdits premier (110) et deuxième groupes d'unités de rouleaux (112) étant disposées avec leurs axes longitudinaux s'étendant sensiblement perpendiculairement par rapport audit axe de l'agencement de palier, et
lesdites unités de rouleaux (108-3) dudit troisième groupe d'unités de rouleaux (114) étant disposées avec leurs axes longitudinaux s'étendant sensiblement parallèlement audit axe de l'agencement de palier, et
dans lequel ledit agencement de palier comprenant en outre un élément de palier (116), lesdites unités de rouleaux (108) étant disposées en contact de roulement avec ledit élément de palier (116),
dans lequel lesdites unités de rouleaux (108-1) dudit premier groupe d'unités de rouleaux (110) étant montées de manière détachable sur une face d'extrémité axiale (118) dudit stator (102) et lesdites unités de rouleaux (108) desdits deuxième et troisième groupes d'unités de rouleaux (110, 112) étant montées sur une surface périphérique extérieure (120) dudit stator (102), ou
lesdites unités de rouleaux (108, 108-1, 108-2, 108-3) desdits premier, deuxième et troisième groupes d'unités de rouleaux (110, 112, 114) étant montées de manière détachable sur une surface périphérique intérieure dudit rotor (104),
**caractérisé en ce que** chaque unité de rouleau (108, 108-1, 108-2, 108-3) comprend un unique rouleau (202, 302) et peut être remplacée individuellement.

2. Générateur d'éolienne selon la revendication 1, dans lequel ledit premier groupe d'unités de rouleaux (110) et ledit deuxième groupe d'unités de rouleaux (112) sont espacés axialement l'un de l'autre.

3. Générateur d'éolienne selon la revendication 2, dans lequel ledit élément de palier (116) est disposé entre ledit premier groupe d'unités de rouleaux (110) et ledit deuxième groupe d'unités de rouleaux (112).

4. Générateur d'éolienne selon l'une des revendications précédentes, chacune des unités de rouleaux (108, 108-1, 108-2, 108-3) comprenant un support de palier (206, 306) supportant le rouleau (202, 302) de manière librement rotative.

5. Générateur d'éolienne selon l'une des revendications précédentes, dans lequel ledit troisième groupe d'unités de rouleaux (114) est disposé axialement entre ledit premier groupe d'unités de rouleaux (110) et ledit deuxième groupe d'unités de rouleaux (112).

6. Générateur d'éolienne selon la revendication 5, dans lequel chacune desdites unités de rouleaux (108) comprend en outre un essieu de palier (204, 304), ledit rouleau (202, 302) étant supporté de manière rotative sur ledit essieu de palier (204, 304) monté sur ledit support de palier (206, 306).

7. Générateur d'éolienne selon l'une des revendications précédentes, dans lequel lesdites unités de rouleaux (108) comprennent en outre un moyen de sollicitation pour solliciter/urger lesdits rouleaux (202, 302) vers une position prédéterminée.

8. Générateur d'éolienne (100) selon l'une des revendications précédentes, dans lequel ledit élément de palier (116) peut tourner avec ledit rotor (104) ou est stationnaire par rapport audit stator (102).

9. Générateur d'éolienne (100) selon la revendication 8, dans lequel ledit élément de palier (116) est monté sur ledit rotor (104) ou sur ledit stator (102).

10. Générateur d'éolienne (100) selon la revendication 8, dans lequel ledit élément de palier (116) est formé intégralement avec ledit rotor (104) ou est formé intégralement avec ledit stator (102).

11. Générateur d'éolienne (100) selon l'une quelconque des revendications précédentes, dans lequel l'élément de palier (116) comprend en outre un élément de doublure/revêtement en contact avec lesdites unités de rouleaux (108).

12. Générateur d'éolienne (100) selon la revendication 11, dans lequel ledit élément de doublure/revêtement et/ou ledit élément de palier comprennent un matériau ayant une haute conductivité thermique.
